(19) Europäisches Patentamt European Patent Office Office européen des brevets

(11) **EP 4 783 260 A2**

(12) **EUROPEAN PATENT APPLICATION**

(43) Date of publication:
**29.07.2026  Bulletin 2026/31**

(21) Application number: **26150980.6**

(22) Date of filing: **09.01.2026**

(51) International Patent Classification (IPC):
**H01M 4/36** *(2006.01)*    **H01M 4/525** *(2010.01)*
**H01M 4/58** *(2010.01)*    **H01M 10/0525** *(2010.01)*

(52) Cooperative Patent Classification (CPC):
**H01M 4/5825; H01M 4/364; H01M 4/525;**
H01M 10/0525; H01M 2004/021; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.01.2025  JP 2025011886**

(71) Applicant: **Prime Planet Energy & Solutions, Inc.
Chuo-ku, Tokyo 103-0022 (JP)**

(72) Inventor: **YAMAMOTO, Yuji
Tokyo, 103-0022 (JP)**

(74) Representative: **Kuhnen & Wacker
Patent- und Rechtsanwaltsbüro PartG mbB
Prinz-Ludwig-Straße 40 A
85354 Freising (DE)**

(54) **POSITIVE ELECTRODE ACTIVE MATERIAL, POSITIVE ELECTRODE, AND NONAQUEOUS ELECTROLYTE SECONDARY BATTERY**

(57)    The positive electrode active material disclosed herein contains a first positive electrode active material particle and a second positive electrode active material particle. An average particle diameter $d_1$ of the first positive electrode active material particle is equal to or more than 3 $\mu$m and not more than 5 $\mu$m, and an average particle diameter $d_2$ of the second positive electrode active material particle is equal to or more than 0.1 $\mu$m and not more than 0.5 $\mu$m. Then, when a sum of the first positive electrode active material particle and the second positive electrode active material particle is treated as 100 wt%, a weight ratio A of the second positive electrode active material particle is equal to or more than 2 wt% and not more than 35 wt% and the average particle diameter $d_2$ and the weight ratio A satisfy a following relationship: $A \leqq -25d_2 + 37.5$.

FIG.3

EP 4 783 260 A2

**Description**

BACKGROUND

A present disclosure relates to a positive electrode active material, a positive electrode, and a nonaqueous electrolyte secondary battery.

Recently, the nonaqueous electrolyte secondary battery has been suitably used for a portable power supply of a personal computer, a portable terminal, or the like, and as a power supply to drive an automobile, such as battery electric vehicle (BEV), hybrid electric vehicle (HEV), and plug-in hybrid electric vehicle (PHEV), or the like.

For instance, Japan Patent Publication 2023-91568 discloses a positive electrode active material for enhancing the electrode density of the nonaqueous electrolyte secondary battery, and the positive electrode active material contains a first lithium composite oxide particle in a single-particle form, and contains a second lithium composite oxide particle in a secondary-particle form having an average particle diameter (D50) larger than that of the first lithium composite oxide particle.

SUMMARY

Recently, the nonaqueous electrolyte secondary battery is, according to the spread of it, required not only to achieve a high capacity (enhancing an electrode density), but also to achieve both of an output characteristic and a resistance characteristic at a preservation time.

The present disclosure has been made in view of the above-described circumstances, and a main object of it is to provide a positive electrode active material that can not only enhance the electrode density of the nonaqueous electrolyte secondary battery but also achieve and impart both of the output characteristic and the resistance characteristic at the preservation time.

A positive electrode active material disclosed herein is a positive electrode active material that is used for a nonaqueous electrolyte secondary battery, and that contains a first positive electrode active material particle and a second positive electrode active material particle. An average particle diameter $d_1$ ($\mu$m) of the first positive electrode active material particle is equal to or more than 3 $\mu$m and not more than 5 $\mu$m, and an average particle diameter $d_2$ ($\mu$m) of the second positive electrode active material particle is equal to or more than 0.1 $\mu$m and not more than 0.5 $\mu$m. Then, a weight ratio A (wt%) of the second positive electrode active material particle is equal to or more than 2 wt% and not more than 35 wt% when a sum of the first positive electrode active material particle and the second positive electrode active material particle is treated as 100 wt%, and the average particle diameter $d_2$ of the second positive electrode active material particle and the weight ratio A of the second positive electrode active material particle satisfy a following relationship: $A \leqq -25d_2 + 37.5$.

According to the configuration described above, it is possible to implement providing the positive electrode active material that can not only enhance the electrode density of the nonaqueous electrolyte secondary battery but also achieve and impart both of the output characteristic and the resistance characteristic at the preservation time.

In another aspect of the herein disclosed technique, a positive electrode is provided, which includes a positive electrode current collector; and a positive electrode active material layer that is arranged on the positive electrode current collector, and the positive electrode active material layer contains the above described positive electrode active material. According to the configuration described above, it is possible to implement providing the positive electrode that can not only enhance the electrode density of the nonaqueous electrolyte secondary battery but also achieve and impart both of the output characteristic and the resistance characteristic at the preservation time.

Further, in another aspect of the herein disclosed technique, a nonaqueous electrolyte secondary battery is provided which includes a positive electrode, a negative electrode, and a nonaqueous electrolyte. According to the configuration described above, it is possible to implement providing the nonaqueous electrolyte secondary battery that can not only enhance the electrode density but also achieve both of the output characteristic and the resistance characteristic at the preservation time.

BRIEF DESCRIPTION OF THE DRAWINGS

FIG. 1 is a schematic view that shows a positive electrode active material in accordance with one embodiment.

FIG. 2 is a schematic cross section view that shows a positive electrode in accordance with the present embodiment along a thickness direction and a width direction.

FIG. 3 is an enlarged view that schematically shows the positive electrode active material contained in a positive electrode active material layer shown by FIG. 2.

FIG. 4 is a cross section view that schematically shows an inside structure of a nonaqueous electrolyte secondary battery in accordance with one embodiment.

FIG. 5 is a schematic exploded view that shows a configuration of an electrode assembly in accordance with one embodiment.

DETAILED DESCRIPTION

Below, while suitably referring to drawings, some preferred embodiments of the present disclosure would be explained. The matters being other than matters particularly mentioned in this description and being required for implementing the present disclosure (for instance, a general configuration and manufacturing process of the nonaqueous electrolyte secondary battery which do not characterize the present disclosure) can be grasped as design matters of those skilled in the art based on the related art in the present field. The present disclosure can be executed based on the contents disclosed in the present description, and the technical common sense in the present field.

Incidentally, in the following drawings, the members/parts providing the same effect are provided with the same numerals and signs, and an overlapped explanation may be omitted or simplified. In addition, a wording "A to B" representing a range in the present description is to semantically cover a meaning of being equal to or more than A and not more than B, and further cover meanings of being "preferably more than A" and "preferably less than B".

In the present description, the term "nonaqueous electrolyte secondary battery" represents an electricity storage device, in which a nonaqueous electrolyte is used as an electrical charge carrier and which is capable of repeatedly performing an electrical charge and an electrical discharge according to a movement of the electrical charge carrier between a positive electrode and a negative electrode. Additionally, in the present description, the term "lithium ion secondary battery" represents an electricity storage device, in which a lithium ion is used as the electrical charge carrier and the electrical charge and the electrical discharge are implemented by the movement of the electrical charge according to the lithium ion between the positive electrode and the negative electrode.

<Positive electrode active material>

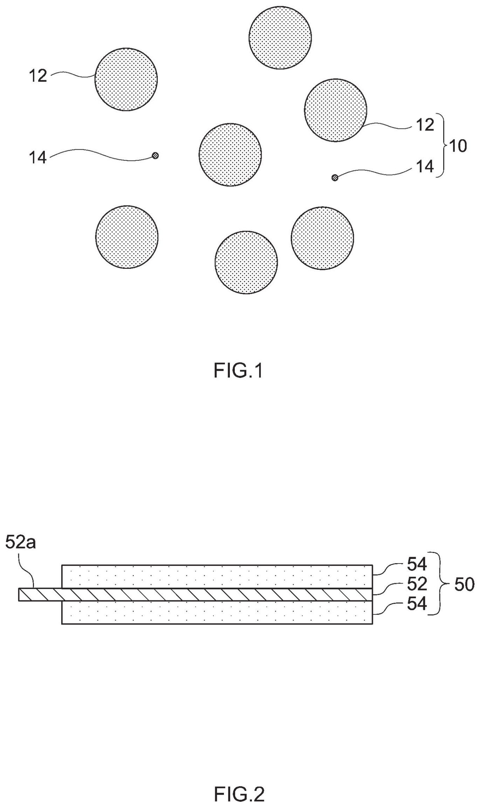

The positive electrode active material 10 is a material that can reversibly store and release the electrical charge carrier (for instance, lithium, or the like). The herein disclosed positive electrode active material 10 is used for a positive electrode of the nonaqueous electrolyte secondary battery, or is suitably used for the positive electrode of the lithium ion secondary battery. The positive electrode active material 10 contains a first positive electrode active material particle 12 and a second positive electrode active material particle 14. FIG. 1 is a schematic view that shows the positive electrode active material 10 in accordance with one embodiment.

The first positive electrode active material particle 12 is a particle (a large particle) whose average particle diameter is relatively larger than the second positive electrode active material particle 14. As the first positive electrode active material particle 12, for instance, it is possible to use a lithium composite oxide, a lithium transition metal phosphate compound, or the like. Although not restricted to this, it is possible as the first positive electrode active material particle 12 to suitably use the lithium composite oxide. A crystal structure of the positive electrode active material is not particularly restricted, and may be a layered structure, a spinel structure, an olivine structure, or the like. Incidentally, the crystal structure of the positive electrode active material can be confirmed by an X-ray diffraction method, or the like.

Regarding the lithium composite oxide, it is preferable as a transition metal element to use a lithium transition metal complex oxide containing at least 1 kind among Ni, Co, and Mn, and as a specific example, it is possible to use a lithium nickel base composite oxide, a lithium cobalt base composite oxide, a lithium manganese base composite oxide, a lithium nickel manganese base composite oxide, a lithium nickel cobalt manganese base composite oxide, a lithium nickel cobalt aluminum base composite oxide, a lithium iron nickel manganese base composite oxide, or the like. Although not restricted to this, as the lithium composite oxide, the lithium nickel cobalt manganese base composite oxide containing Ni, Co, and Mn is preferable because a battery characteristic of it is superior to having a small initial resistance or the like.

Incidentally, the term "lithium nickel cobalt manganese base composite oxide" in the present description is a term semantically covering not only the oxide whose constituent element is Li, Ni, Co, Mn, or O, but also an oxide containing 1 kind, 2 kinds, or more kinds of additive elements other than them. As an example of the additive element described above, it is possible to use a transition metal element, such as Mg, Ba, Sr, Ca, Al, Ti, V, Cr, Y, Zr, Nb, Mo, Hf, Ta, W, Na, K, Fe, Cu, Zn, and Sn, a typical metal element, or the like. In addition, the additive element may be a semimetal element, such as B, C, Si, and P, or a non-metal element, such as S, F, Cl, Br, and I. This matter is similar even on the above described lithium nickel base composite oxide, lithium nickel cobalt base composite oxide, lithium nickel manganese base composite oxide, lithium nickel cobalt aluminum base composite oxide, lithium iron nickel manganese base composite oxide, or the like.

Although not restricted to this, regarding the lithium nickel cobalt manganese base composite oxide, from a perspective of implementing the higher capacity, a Ni content amount with respect to a sum (Ni + Co + Mn) of the nickel, the cobalt, and the manganese is preferably equal to or more than 60 mol%, or further preferably equal to or more than 65 mol%. On the other hand, from a perspective of further implementing the higher capacity, the Ni content amount with respect to the sum (Ni + Co + Mn) of the nickel, the cobalt, and the manganese is preferably equal to or less than 75 mol%, or further preferably equal to or less than 70 mol%.

It is preferable that the lithium nickel cobalt manganese base composite oxide includes a composition represented by Formula (I) described below.

$$Li_\alpha Ni_x Mn_y Co_z M_t O_2 \qquad (I)$$

In the above described Formula (I), $\alpha$, x, y, z, and t respectively satisfy $1.00 \leqq \alpha \leqq 1.30$, $0.25 < x < 0.90$, $0 < y < 0.60$, $0 < z < 0.60$, and $0 \leqq t \leqq 0.10$ and they satisfy x + y + z + t = 1. When 0 < t is satisfied, M is at least 1 kind of element that is selected from a group consisting of Mg, Ca, Al, Ti, V, Cr, Fe, Cu, Zn, Zr, Nb, Mo, Ta, and W.

Regarding $\alpha$, it preferably satisfies $\alpha \leqq 1.20$, or further preferably satisfies $\alpha \leqq 1.10$. From a perspective of enhancing the battery characteristic (for instance, an input-output characteristic or a cycle characteristic), regarding x, it preferably satisfies $0.5 \leqq x$, or further preferably satisfies $0.7 \leqq x$, it is, for instance, $0.8 \leqq x \leqq 0.9$, regarding y, it preferably satisfies $0.01 \leqq y$, or further preferably satisfies $0.03 \leqq y \leqq 0.20$, it is, for instance, $0.05 \leqq y \leqq 0.1$, regarding z, it preferably satisfies $0.01 \leqq z \leqq 0.50$, or further preferably satisfies $0.05 \leqq z \leqq 0.30$, or it is, for instance, $0.10 \leqq z \leqq 0.20$. Regarding t, it preferably satisfies $0 \leqq t \leqq 0.05$, or is further preferably 0.

As the lithium transition metal phosphate compound, it is possible to use, for instance, lithium iron phosphate ($LiFePO_4$) (LFP), lithium manganese phosphate ($LiMnPO_4$), lithium manganese iron phosphate, or the like.

In some embodiments, it is preferable that the first positive electrode active material particle 12 is in a single-particle form. According to the aspect described above, a resistance property of the positive electrode active material for an expansion and contraction is better, and thus it is possible to suitably suppress the first positive electrode active material particle 12 from being cracked. Therefore, an increase in resistance during storage can be suitably suppressed. Incidentally, in the present description, the term "single particle" means a particle that is generated by a growth of a single crystal nucleus and that is a particle of a single crystal containing no grain boundary. A number of primary particles configuring one single particle is typically less than 10, for instance, about 2 to 5. Whether the particle is the single crystal or not can be confirmed, for instance, by an analysis performed on an electron diffraction pattern with an electron microscope (such as a scanning electron microscope).

It should be noted that it is not restricted to this, and the first positive electrode active material particle 12 may be in a secondary-particle form that consists of plural primary particles aggregated by a physical or chemical bonding forces. Incidentally, in the present description, the term "primary particle" means a minimum unit of the particles configuring the first positive electrode active material particle 12, and in particular, means a minimum unit decided on the basis of an apparent geometric form. A number of the primary particles configuring one secondary particle is typically equal to or more than 10, for instance, equal to or more than 20, preferably equal to or more than 100, or further preferably equal to or more than several hundred. Incidentally, the number of the primary particles in one secondary particle can be confirmed by observing the secondary particle at a magnification being 10,000 to 30,000 times with an electron microscope (such as a scan electron microscope).

An average particle diameter $d_1$ ($\mu$m) of the first positive electrode active material particle 12 is, for instance, equal to or more than 3 $\mu$m, or further preferably equal to or more than 3.5 $\mu$m. As the average particle diameter $d_1$ is larger, a resistance characteristic at a preservation time becomes better. On the other hand, if the average particle diameter $d_1$ is too large (for instance, more than 5 $\mu$m), there are some fears of reducing the output characteristic. Thus, the average particle diameter $d_1$ ($\mu$m) of the first positive electrode active material particle 12 is, for instance, equal to or less than 5 $\mu$m, preferably equal to or less than 4.5 $\mu$m, or further preferably equal to or less than 4 $\mu$m. When the average particle diameter $d_1$ of the first positive electrode active material particle 12 is within the range described above, it is possible to achieve both the resistance characteristic and the output characteristic. Incidentally, the term "average particle diameter $d_1$ ($\mu$m) of the first positive electrode active material particle" means an average particle diameter of the primary particle when the first positive electrode active material particle 12 is in the single-particle form, and means an average particle diameter of the secondary particle when the first positive electrode active material particle 12 is in a secondary-particle form.

Incidentally, in the present description, the term "average particle diameter" represents a median diameter (D50), and means a particle diameter corresponding to cumulative frequency 50 volume% from a side of a fine particle whose particle diameter is small, regarding a particle size distribution on a volume basis with a laser diffraction and scattering method.

As shown in FIG. 1, the first positive electrode active material particle 12 herein is formed in an approximately spheroidized shape. Although not restricted to this, a degree of sphericity of the first positive electrode active material particle 12 is preferably equal to or more than 0.93, or further preferably equal to or more than 0.94. According to the configuration described above, it is possible to suitably enhance an electrode density. Incidentally, in the present description, the term "degree of sphericity" means a value for which a commercially available particle image imaging analysis device (for instance, FPIA-3000 made by Sysmex Corporation) is used, plural particle projected images are

obtained, $4\pi$ x (particle area)/(perimeter)$^2$ is obtained for each particle so as to calculate an arithmetical mean, and the arithmetical mean is used as the value. Regarding the degree of sphericity, as the number is closer to 1, it shows that the particle is formed to be closer to a perfect sphere. Additionally, in the present description, the term "approximately spheroidized" represents a form that can be approximately considered to be a sphere as a whole. However, it is not restricted to this, and a shape of the first positive electrode active material particle 12 may be formed in an irregular shape.

The second positive electrode active material particle 14 is a particle (a small particle) whose average particle diameter is relatively smaller than the first positive electrode active material particle 12. A composition of the second positive electrode active material particle 14 may be the same as or different from that of the first positive electrode active material particle 12. In some embodiments, regarding the second positive electrode active material particle 14, it is preferable to use a lithium transition metal phosphate compound, and it is preferable among them that the second positive electrode active material particle 14 is the lithium iron phosphate. The lithium iron phosphate exhibits a plateau potential at 3.2 V. Accordingly, the voltage variation at a low SOC (state of charge) can be suppressed. Therefore, it is possible to suitably enhance the output characteristic. In addition, when the lithium iron phosphate is used as the second positive electrode active material particle 14, it is easy to control making the average particle diameter $d_2$ ($\mu$m) of the second positive electrode active material particle 14 be within a range described later.

Although not restricted to this, it is preferable that the second positive electrode active material particle 14 is in the single-particle form. According to the aspect described above, a resistance property of the positive electrode active material against the expansion and contraction is good, and thus it is possible to suitably suppress the crack of the second positive electrode active material particle 14. Therefore, it is possible to suitably suppress the resistance increase at the preservation time. Incidentally, it is not restricted to this, the second positive electrode active material particle 14 may be in the secondary-particle form that consists of plural primary particles aggregated by the physical or chemical bonding forces.

As shown in FIG. 1, the second positive electrode active material particle 14 herein is formed in an approximately spheroidized shape. Although not restricted to this, the degree of sphericity of the second positive electrode active material particle 14 is, from a perspective of suitably enhancing the electrode density, preferably equal to or more than 0.95, or further preferably equal to or more than 0.96. However, it is not restricted to this, and the shape of the second positive electrode active material particle 14 may be an irregular shape.

An average particle diameter $d_2$ ($\mu$m) of the second positive electrode active material particle 14 is, for instance, equal to or less than 0.5 $\mu$m, preferably equal to or less than 0.4 $\mu$m, or further preferably equal to or less than 0.3 $\mu$m. As the average particle diameter $d_2$ is smaller, it tends to further suitably enhance the electrode density. On the other hand, from a perspective of suppressing the second positive electrode active material particle 14 from being excessively aggregated, the average particle diameter $d_2$ ($\mu$m) of the second positive electrode active material particle 14 is, for instance, equal to or more than 0.1 $\mu$m, preferably equal to or more than 0.15 $\mu$m, or further preferably equal to or more than 0.2 $\mu$m. Incidentally, the term "average particle diameter $d_2$ ($\mu$m) of the second positive electrode active material particle" means an average particle diameter of the primary particle when the second positive electrode active material particle 14 is in the single-particle form, and means an average particle diameter of the secondary particle when the second positive electrode active material particle 14 is in the secondary-particle form.

Regarding the positive electrode active material 10 disclosed herein, when a sum of the first positive electrode active material particle 12 and the second positive electrode active material particle 14 is treated as 100 wt%, a weight ratio A (wt%) of the second positive electrode active material particle 14 is, for instance, equal to or more than 2 wt%, preferably equal to or more than 5 wt%, or further preferably equal to or more than 10 wt%. When the weight ratio A of the second positive electrode active material particle 14 is equal to or more than a constant value (equal to or more than 2 wt%), it is possible to enhance a close packing property of the positive electrode active material. Thus, it is possible to enhance the electrode density. On the other hand, if the weight ratio A of the second positive electrode active material particle 14 is too high (more than 35 wt%), the second positive electrode active material particle itself has poor packing properties, and thus there are some fears of reducing the electrode density. Therefore, the weight ratio A of the second positive electrode active material particle 14 is, for instance, equal to or less than 35 wt%, preferably equal to or less than 30 wt%, or further preferably equal to or less than 25 wt%. When the weight ratio A of the second positive electrode active material particle 14 fall within a range described above, it is possible to suitably enhance the electrode density.

In this regard, about enhancement of the electrode density of the positive electrode active material 10, an examination of the present inventor has contributed to understanding that a suitable range of the weight ratio A (wt%) of the second positive electrode active material particle 14 is different according to a size of the average particle diameter $d_2$ of the second positive electrode active material particle 14. Then, as a result of an intensive study performed by the present inventor, the present inventor has found a preferable relationship between the average particle diameter $d_2$ of the second positive electrode active material particle 14 and the weight ratio A of the second positive electrode active material particle 14.

In the positive electrode active material 10 in accordance with the present disclosure, the average particle diameter $d_2$ of the second positive electrode active material particle 14 and the weight ratio A of the second positive electrode active material particle 14 satisfy a relationship: $A \leqq -25d_2 + 37.5$. Therefore, a balance of the weight ratio A of the second positive electrode active material particle 14 with respect to the average particle diameter $d_2$ of the second positive electrode active material particle 14 becomes suitable, and thus it is possible to provide the positive electrode active material 10 in which the electrode density has been enhanced. Incidentally, the above-described relationship is preferably $A \leqq -25d_2 + 32.5$, or further preferably $A \leqq -25d_2 + 27.5$. Therefore, it is possible to further suitably enhance the electrode density of the positive electrode active material 10.

The positive electrode active material 10 may further contain, in addition to the first positive electrode active material particle and the second positive electrode active material particle, a particle other than these particles which is capable of functioning as the positive electrode active material, within a range where the effect of the herein disclosed technique is not inhibited. Although not restricted to this, the above described particle capable of functioning as the above described positive electrode active material may be contained, for instance, equal to or less than 10 wt% with respect to a total weight of the positive electrode active material 10, preferably equal to or less than 5 wt%, or further preferably equal to or less than 1 wt%. The positive electrode active material 10 may consist of only the first positive electrode active material particle 12 and the second positive electrode active material particle 14.

When the positive electrode active material in accordance with the present embodiment is used for the positive electrode so as to construct the nonaqueous electrolyte secondary battery, it is possible to impart an enhanced the electrode density of the positive electrode and to achieve both the output characteristic and the resistance characteristic during storage. The positive electrode active material in accordance with the present embodiment can be used typically for the nonaqueous electrolyte secondary battery, or preferably for the nonaqueous type lithium ion secondary battery. The positive electrode active material in accordance with the present embodiment can be used as a positive electrode active material of an all-solid state secondary battery.

Then, from another aspect, the positive electrode in accordance with the present embodiment includes a positive electrode current collector and a positive electrode active material layer that is arranged on the positive electrode current collector. The positive electrode active material layer contains the positive electrode active material in accordance with the above described embodiment. Below, the positive electrode in accordance with the present embodiment would be explained while the positive electrode used for the lithium ion secondary battery is referred as an example, but the positive electrode in accordance with the present embodiment is not restricted to the explain explained below.

<Positive electrode>

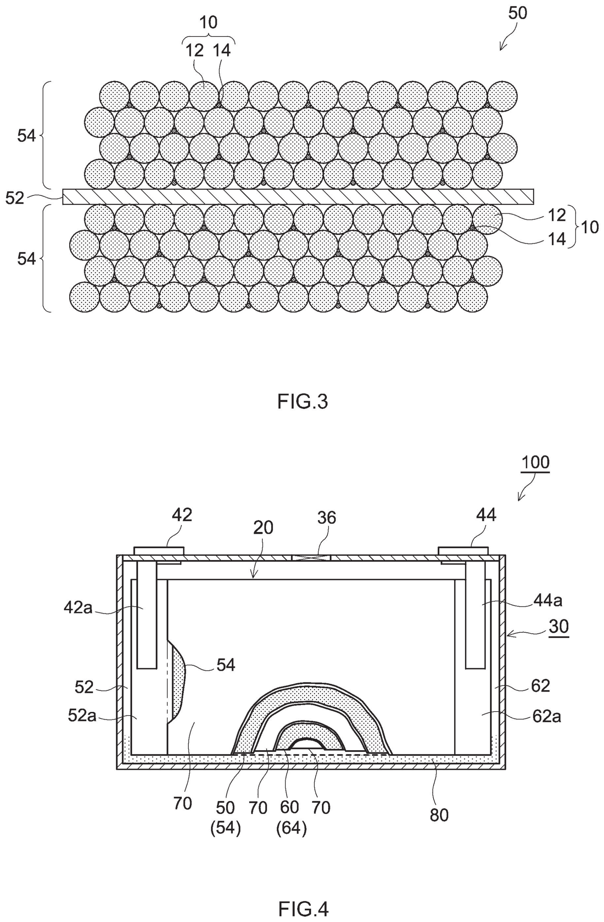

FIG. 2 is a schematic cross section view in which the positive electrode in accordance with the present embodiment is shown along a thickness direction and a width direction. FIG. 3 is an enlarged view that schematically shows the positive electrode active material 10 contained in the positive electrode active material layer 54 shown by FIG. 2. In addition, FIG. 3 is a schematic view, and thus the number of the particles, distribution, or the like is not restricted to one shown in FIG. 3.

As shown in FIG. 2, the positive electrode 50 includes a positive electrode current collector 52, and a positive electrode active material layer 54 arranged on the positive electrode current collector 52. In FIG. 2, the positive electrode active material layer 54 is provided on both surfaces of the positive electrode current collector 52. However, the positive electrode active material layer 54 may be provided on one surface of the positive electrode current collector 52.

As the positive electrode current collector 52, a well known positive electrode current collector used for the lithium ion secondary battery may be used, and thus it is possible, as the example of it, to use a sheet or a foil which is made of a metal being good for an electrically conductive property (for instance, aluminum, nickel, titanium, stainless steel, or the like). As the positive electrode current collector 52, it is preferable to use an aluminum foil.

A size of the positive electrode current collector 52 is not particularly restricted, and can be suitably decided on the basis of a battery design. In a situation where the aluminum foil is used as the positive electrode current collector 52, a thickness of it is not particularly restricted, but it is, for instance, equal to or more than 5 $\mu$m and not more than 35 $\mu$m, or preferably equal to or more than 7 $\mu$m and not more than 20 $\mu$m.

The positive electrode active material layer 54 contains the positive electrode active material. In the present embodiment, as the positive electrode active material, the positive electrode active material 10 in accordance with the above described embodiment is used. The positive electrode active material layer 54 may contain another positive electrode active material within a range in which the effect of the present disclosure is not inhibited (for instance, equal to or less than 10 wt% with respect to the total weight of the positive electrode active material, preferably equal to or less than 5 wt%, or further preferably equal to or less than 1 wt%), in addition to the positive electrode active material according to the above described embodiment.

In some embodiments, as shown by FIG. 3, regarding the positive electrode active material layer 54, it is preferable that the first positive electrode active material particle 12 and the second positive electrode active material particle 14 are dispersed throughout the entire positive electrode active material layer 54.. According to the aspect described above, it is possible to further suitably enhance the electrode density.

The positive electrode active material layer 54 may contain a component being other than the positive electrode active material, for instance, contain trilithium phosphate, an electrically conducting material, a binder, or the like. As the electrically conducting material, it is possible to suitably use, for instance, a carbon black, such as acetylene black (AB) or the other carbon material (for instance, a carbon nanotube, or the like). As the binder, for instance, it is possible to use polyvinylidene fluoride (PVDF), or the like.

A content amount of the positive electrode active material in the positive electrode active material layer 54 (i.e., a content amount of the positive electrode active material with respect to a total mass of the positive electrode active material layer 54) is not particularly restricted, but is preferably equal to or more than 70 mass%, further preferably equal to or more than 80 mass% and not more than 99 mass%, or furthermore preferably equal to or more than 85 mass% and not more than 98 mass%. A content amount of the electrically conducting material in the positive electrode active material layer 54 is not particularly restricted, but is preferably equal to or more than 0.5 mass% and not more than 15 mass%, or further preferably equal to or more than 1 mass% and not more than 10 mass%. A content amount of the binder in the positive electrode active material layer 54 is not particularly restricted, but is preferably equal to or more than 0.5 mass% and not more than 15 mass%, or further preferably equal to or more than 0.8 mass% and not more than 10 mass%.

A thickness of the positive electrode active material layer 54 per one surface is not particularly restricted, but is, for instance, equal to or more than 10 $\mu$m, or preferably equal to or more than 20 $\mu$m. On the other hand, the thickness described above is, for instance, equal to or less than 400 $\mu$m, or preferably equal to or less than 300 $\mu$m.

The electrode density of the positive electrode active material layer 54 is not particularly restricted, but is, from a perspective of implementing a higher volume energy density, preferably 3.00 g/cm$^3$ to 4.00 g/cm$^3$, further preferably 3.20 g/cm$^3$ to 4.00 g/cm$^3$, furthermore preferably 3.40 g/cm$^3$ to 4.00 g/cm$^3$, or preferably in particular 3.50 g/cm$^3$ to 4.00 g/cm$^3$. As described above, according to the herein disclosed positive electrode active material 10, it is possible to enhance the electrode density. Therefore, according to the present embodiment, it is possible to provide the positive electrode 50 in which the density of the positive electrode active material layer 54 is suitably enhanced. Incidentally, in the present description, the term "electrode density" means a solid content density of the electrode active material layer (i.e., a coating film after drying) from which a void (a gas phase) is excluded. For instance, the electrode density (g/cm$^3$) can be obtained by dividing a mass W of the electrode active material layer by an apparent volume V of the electrode active material layer. The apparent volume V of the electrode active material layer can be obtained from an area size S of the electrode active material layer in a plane view and a thickness T of the electrode active material layer. Alternatively, the positive electrode is cut out to an arbitrary size, and then its weight and volume are measured. After that, the positive electrode current collector and the positive electrode active material layer are peeled off by a solvent agent (for instance, N-methyl pyrrolidone (NMP), or the like), and then the weight and the volume of the positive electrode current collector are measured. Then, by subtracting the weight and the volume of the positive electrode current collector from the weight and the volume of the positive electrode, the weight and the volume of the positive electrode active material can be calculated, and thus it is possible to obtain the electrode density. In addition, it is possible to obtain the electrode density by multiplying a true density of the electrode by a filling rate. The true density of the electrode can be calculated on the basis of a density of a configuration component and a content rate. The filling rate can be calculated, for instance, by a cross section observation on the electrode active material layer with a scanning electron microscope (SEM), in which an image analyzing software "ImageJ" is used to perform a binarization processing so as to make a solid phase portion be represented by white color and a gas phase (void) portion be represented by black color.

As shown in an illustrated example, a positive electrode active material layer non-formation region 52a, on which the positive electrode active material layer 54 is not provided, may be provided at one of end parts of the positive electrode 50 in a width direction. On the positive electrode active material layer non-formation region 52a, the positive electrode current collector 52 is exposed, and thus the positive electrode active material layer non-formation region 52a can function as a current collector part. However, a configuration for performing the electrical collection from the positive electrode 50 is not restricted to this.

A protective layer (not shown in drawings) that is insulating and contains insulating particles may be provided at a position adjacent to the positive electrode active material layer 54 in the positive electrode active material layer non-formation region 52a of the positive electrode 50. By this protective layer, it is possible to inhibit a short circuit caused between the positive electrode active material layer non-formation region 52a and the negative electrode active material layer 64.

The positive electrode 50 in accordance with the present embodiment can be manufactured according to a well known method. For instance, the positive electrode 50 can be manufactured by manufacturing a paste for forming the positive electrode active material layer that contains the positive electrode active material, the solvent (a dispersion medium), as needed, the binder, the electrically conducting material, and the like, applying this paste to coat the positive electrode current collector 52, drying it, and then performing the pressing process on it.

The positive electrode in accordance with the present embodiment is typically used for the nonaqueous electrolyte secondary battery, or can be preferably used for the nonaqueous type lithium ion secondary battery. The positive electrode in accordance with the present embodiment can be used as the positive electrode of the all-solid state secondary battery.

Then, from another aspect, the nonaqueous electrolyte secondary battery in accordance with the present embodiment includes the positive electrode, the negative electrode, and the nonaqueous electrolyte. This positive electrode contains the positive electrode active material 10 in accordance with the above described embodiment. Below, a flat-shaped lithium ion secondary battery, which includes a flat-shaped wound electrode assembly and a flat-shaped battery case, is referred as an example, the nonaqueous electrolyte secondary battery in accordance with the present embodiment will be described, but the nonaqueous electrolyte secondary battery in accordance with the present embodiment is not restricted to the example explained below.

<Nonaqueous electrolyte secondary battery>

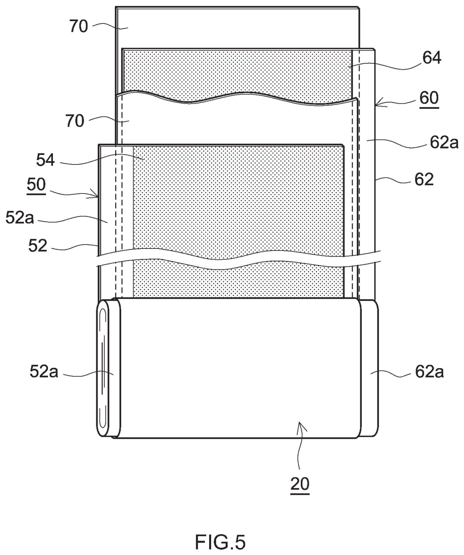

FIG. 4 is a cross section view that schematically shows an inside structure of the nonaqueous electrolyte secondary battery 100 in accordance with one embodiment. FIG. 5 is a schematic exploded view that shows a configuration of the electrode assembly 20 in accordance with one embodiment. As shown in FIG. 4, the nonaqueous electrolyte secondary battery 100 in accordance with the present embodiment is a sealed type lithium ion secondary battery that is constructed by accommodating the flat-shaped electrode assembly 20 and the nonaqueous electrolyte 80 inside the battery case 30 formed in a flat square shape.

The battery case 30 is an outer container that is configured to accommodate the electrode assembly 20 and the nonaqueous electrolyte 80. As a material of the battery case 30, it is possible to use, for instance, a metal material that is lightweight and that has a good thermal conductivity, such as aluminum. On an outer surface of the battery case 30, a positive electrode terminal 42 and a negative electrode terminal 44, which are for outside connection, and a thin-walled safe valve 36, which is set to release an internal pressure of the battery case 30 when the internal pressure is increased to a level being equal to or more than a predetermined level, are provided. In addition, on the battery case 30, an injection port (not shown in drawings) for injecting the nonaqueous electrolyte 80 is provided. The positive electrode terminal 42 is electrically connected to the positive electrode current collection plate 42a, and the negative electrode terminal 44 is electrically connected to the negative electrode current collection plate 44a.

The electrode assembly 20 is, as shown in FIG. 4 and FIG. 5, formed in a shape in which the positive electrode sheet 50 and the negative electrode sheet 60 are stacked one on another via 2 long separator sheets 70 and then wound in a longitudinal direction. The positive electrode sheet 50 includes a configuration in which the positive electrode active material layer 54 is formed on one surface or both surfaces (in this example, both surfaces) of the long positive electrode current collector 52 along the longitudinal direction. The negative electrode sheet 60 includes a configuration in which the negative electrode active material layer 64 is formed on one surface or both surfaces (in this example, both surfaces) of the long negative electrode current collector 62 along the longitudinal direction. The positive electrode active material layer non-formation region 52a (i.e., a portion where the positive electrode active material layer 54 is not formed and thus the positive electrode current collector 52 is exposed) and the negative electrode active material layer non-formation region 62a (i.e., a portion where the negative electrode active material layer 64 is not formed and thus the negative electrode current collector 62 is exposed) are formed to outwardly protrude from both ends of the electrode assembly 20 in a winding axis direction (i.e., a sheet width direction orthogonal to the longitudinal direction). On the positive electrode active material layer non-formation region 52a and the negative electrode active material layer non-formation region 62a, the positive electrode current collection plate 42a and the negative electrode current collection plate 44a are joined respectively. Incidentally, shapes of the positive electrode active material layer non-formation region 52a and the negative electrode active material layer non-formation region 62a are not restricted to the illustrated examples. The positive electrode active material layer non-formation region 52a and the negative electrode active material layer non-formation region 62a may be formed as current collector tabs that are processed to have predetermined shapes.

The positive electrode 50 in accordance with the above described embodiment is used as the positive electrode sheet 50. Incidentally, regarding the positive electrode sheet 50 in accordance with the present embodiment, the positive electrode active material layer 54 is formed on both surfaces of the positive electrode current collector 52.

The negative electrode current collector 62 is preferably made of a metal, or further preferably consists of a metal foil. The negative electrode current collector 62 herein is a copper foil. The negative electrode active material layer 64 contains a negative electrode active material. As the negative electrode active material, it is possible to use, for instance, a Si-containing material, such as Si, SiO (silicon oxide), and SiC (silicon carbide), or a carbon material, such as graphite, hard carbon, and soft carbon. The negative electrode active material layer 64 may contain an additive component other than the negative electrode active material. As the additive component, it is possible to use, for instance, a binder, a thickening agent, or the like. As the binder, it is possible to use, for instance, rubbers, such as styrene butadiene rubber (SBR), or a fluorine-base resin, such as polyvinylidene fluoride (PVDF). As the thickening agent, it is possible to use, for instance, celluloses, such as carboxymethyl cellulose (CMC).

As the separator sheet 70, it is possible to use, for instance, a porous sheet (film) made of a resin, such as polyethylene (PE), polypropylene (PP), and polyester. The porous sheet described above may have a single layer structure, or may have two or more layers laminate structure (for instance, a three layers structure in which PP layers are laminated on both surfaces of a PE layer). On a surface of the separator sheet 70, a heat resistance layer (HRL) may be provided.

The nonaqueous electrolyte 80 typically contains a nonaqueous solvent and a supporting salt (an electrolyte salt). As the nonaqueous solvent, it is possible without particular restriction to use an organic solvent, such as carbonates, ethers, esters, nitriles, sulfones, and lactones, which is used for an electrolytic solution of a general lithium ion secondary battery. Among them, the carbonates are preferable, and as a specific example of them, it is possible to use ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluoro dimethyl carbonate (TFDMC), or the like. Regarding the nonaqueous solvent as described above, one kind could be used alone, alternatively two or more kinds could be suitably combined so as to be used. As one example, the nonaqueous solvent consists of only carbonates. As another example, the nonaqueous solvent contains carbonates, and esters, such as methyl acetate.

As the supporting salt, it is possible to suitably use, for instance, a lithium salt (preferably, $LiPF_6$), such as $LiPF_6$, $LiBF_4$, and lithium bis(fluorosulfonyl)imide (LiFSI). A concentration of the supporting salt is preferably equal to or more than 0.7 mol/L and not more than 1.3 mol/L.

Incidentally, the nonaqueous electrolyte 80 may contain a component other than the above described component, for instance, various additive agents, which may be a coating layer forming agent, such as vinylene carbonate (VC) and oxalate complex; a gas generating agent, such as biphenyl (BP) and cyclohexylbenzene (CHB); a thickening agent; or the like, insofar as the effect of the present disclosure is not significantly spoiled.

Above, the square-shaped nonaqueous electrolyte secondary battery 100 including the flat-shaped electrode assembly 20 has been explained as one example. However, the lithium ion secondary battery can be configured as a lithium ion secondary battery including a laminate type electrode assembly (i.e., an electrode assembly in which plural positive electrodes and plural negative electrodes are alternately laminated). In addition, the lithium ion secondary battery can be configured as a cylindrical lithium ion secondary battery, a laminate case type lithium ion secondary battery, a coin type lithium ion secondary battery, a button type lithium ion secondary battery, or the like. Furthermore, it is possible to construct an all-solid state secondary battery in which a solid electrolyte is used as the electrolyte.

The herein disclosed nonaqueous electrolyte secondary battery 100, which includes the positive electrode (the positive electrode sheet) 50 containing the positive electrode active material 10, can be used for various purposes. As a suitable purpose, it is possible to consider a driving power supply that is mounted on a vehicle, such as plug-in hybrid vehicle (PHEV; Plug-in Hybrid Electric Vehicle), a hybrid vehicle (HEV; Hybrid Electric Vehicle), an electric vehicle (BEV; Battery Electric Vehicle), or the like. In addition, the nonaqueous electrolyte secondary battery 100 can be used as a storage battery, such as small electric power storage device. Regarding the nonaqueous electrolyte secondary battery 100, it is possible to typically adopt a form of a battery pack in which plural ones are connected in series and/or in parallel.

Below, an example related to the present disclosure will be explained, but it is not intended that the present disclosure is restricted to contents shown by this example.

[Examination 1]

(Example 1 to Example 5)

<Preparation of positive electrode active material>

As the first positive electrode active material particle, $LiNi_{1/3}Co_{1/3}Mn_{1/3}O_2$ (NCM) formed in the secondary-particle form was prepared, whose average particle diameter $d_1$ (μm) was shown in Table 1 and Table 2. As the second positive electrode active material particle, $LiNi_{1/3}Co_{1/3}Mn_{1/3}O_2$ (NCM) formed in the single-particle form was prepared, whose average particle diameter $d_2$ (μm) was 0.1 μm. Incidentally, for the average particle diameter $d_1$ and the average particle diameter $d_2$, a particle size distribution on a volume basis was measured with a laser diffraction and scattering method, and a value of the D50 was used. Incidentally, regarding the degree of sphericity for the first and second positive electrode active materials of each example, one whose value was within a range of 0.91 to 0.97 was used.

The prepared first positive electrode active material particle and second positive electrode active material particle were mixed to satisfy a weight ratio being first positive electrode active material particle : second positive electrode active material particle = 97 : 3. In other words, they were mixed to make a weight ratio A (wt%) of the second positive electrode active material particle be 3 wt% when a sum of the first positive electrode active material particle and the second positive electrode active material particle was treated as 100 wt%. As described above, the positive electrode active materials in accordance with Example 1 to Example 5 were prepared.

(Example 6)

In Example 6, as the first positive electrode active material particle, $LiNi_{1/3}Co_{1/3}Mn_{1/3}O_2$ (NCM) formed in the single-particle form was prepared, whose average particle diameter $d_1$ ($\mu$m) was 4 $\mu$m. Except for this, similarly to Example 3, the positive electrode active material in accordance with Example 6 was prepared.

(Example 7)

In Example 7, as the second positive electrode active material particle, $LiFePO_4$ (LFP) formed in the single-particle form was prepared, whose average particle diameter $d_2$ ($\mu$m) was 0.1 $\mu$m. Except for this, similarly to Example 6, the positive electrode active material in accordance with Example 7 was prepared.

(Reference example 1 to Reference example 5)

In addition, as reference examples corresponding to Example 1 to Example 5, the positive electrode active materials configured with only the first positive electrode active material particles in accordance with Example 1 to Example 5 (i.e., the weight ratio A of the second positive electrode active material particle was 0 wt%) were respectively prepared. These positive electrode active materials were respectively treated as Reference example 1 to Reference example 5.

<Manufacture of positive electrode sheet for evaluation>

The obtained positive electrode active material, the acetylene black (AB) as the electrically conducting material, and the polyvinylidene fluoride (PVDF) as the binder were mixed in N-methyl pyrrolidone (NMP) to satisfy a weight ratio being positive electrode active material : AB : PVDF = 85 : 10 : 5, so that a paste for forming the positive electrode active material layer was prepared. This paste was applied on the aluminum (Al) foil whose thickness was 15 $\mu$m, was dried, and then was pressed by a linear pressure being 3 t/cm at a room temperature. Therefore, the positive electrode sheet, in which the positive electrode active material layer was formed on the Al foil, was manufactured.

(Example 1 to Example 7 and Reference example 1 to Reference example 5)

<Electrode density ratio measurement of positive electrode active material layer>

In this evaluation, the electrode density (g/cm$^3$) of the positive electrode active material layer formed with the positive electrode active material of each example was measured. In particular, the positive electrode sheet of each example was cut out to have an arbitrary size, and its weight and volume were measured. Then, by using the N-methyl pyrrolidone (NMP), the positive electrode current collector and the positive electrode active material layer were peeled off from the positive electrode sheet. After that, the weight and the volume of the positive electrode current collector were measured. Then, by subtracting the weight and the volume of the positive electrode current collector from the weight and the volume of the positive electrode sheet, the weight and the volume of the positive electrode active material layer were calculated. Based on the obtained weight and volume of the positive electrode active material layer, the electrode density of the positive electrode active material layer of each example was calculated. Then, a ratio of the electrode density of the positive electrode active material layer in accordance with the other example was calculated, while the electrode density (g/cm$^3$) of Reference example 3 (i.e., a configuration consisting of only the first positive electrode active material in the secondary-particle form, whose average particle diameter $d_1$ was 4 $\mu$m) was treated as 100. Results of Example 1 to Example 5 and Reference example 1 to Reference example 5 are shown in Table 1. Results of Example 6 and Example 7 are shown at "Electrode density ratio" in Table 2. In addition, the results of Example 1 to Example 5 are shown, in addition to Table 1, at "Electrode density ratio" of Table 2, too.

[Table 1]

Table 1

| | Average particle diameter $d_1$ of first positive electrode active material particle ($\mu$m) | Weight ratio A of second positive electrode active material particle (wt%) | Electrode density ratio |
|---|---|---|---|
| Reference example 1 | 2 | 0 | 87 |
| Example 1 | | 3 | 98 |
| Reference example 2 | 3 | 0 | 96 |
| Example 2 | | 3 | 108 |
| Reference example 3 | 4 | 0 | 100 |
| Example 3 | | 3 | 113 |
| Reference example 4 | 5 | 0 | 108 |
| Example 4 | | 3 | 119 |
| Reference example 5 | 6 | 0 | 108 |
| Example 5 | | 3 | 120 |

As shown by Table 1, in comparison with Reference example 1 to Reference example 5 that were configured with only the first positive electrode active material particle, the electrode density was increased in any of Example 1 to Example 5 in which mixing was performed to make the weight ratio A (wt%) of the second positive electrode active material particle be 3 wt%. In addition, there was a tendency that the electrode density was higher as the average particle diameter $d_1$ ($\mu$m) of the first positive electrode active material particle was larger.

(Example 1 to Example 7)

<Manufacture of nonaqueous electrolyte secondary battery for evaluation>

The natural graphite (C) as the negative electrode active material, the styrene butadiene rubber (SBR) as the binder, and the carboxymethyl cellulose (CMC) as the thickening agent were mixed in an ion exchange water to satisfy the weight ratio being C : SBR : CMC = 98 : 1 : 1, so that a paste for forming the negative electrode active material layer was prepared. This paste was applied on the copper foil whose thickness was 10 $\mu$m, and then was dried, so that the negative electrode sheet was manufactured.
In addition, as the separator sheet, a porous polyolefin sheet was prepared, which had a three layers structure of PP/PE/PP and whose thickness was 20 $\mu$m.
The above described positive electrode sheet, negative electrode sheet, and separator sheet were superimposed, an electrode terminal was attached, and then they were accommodated in a laminate case. Next, the nonaqueous electrolyte was injected into the laminate case, and then the laminate case was airtightly sealed. Incidentally, as the nonaqueous electrolyte, one was used in which the $LiPF_6$ as the supporting salt was dissolved at a concentration being 1.0 mol/L into a mixed solvent containing the ethylene carbonate (EC), the dimethyl carbonate (DMC), and the ethyl methyl carbonate (EMC) at a volume ratio being 3 : 4 : 3. As described above, the nonaqueous electrolyte secondary battery for evaluation of each example was manufactured.

<Output characteristic evaluation>

An activating process was performed on the nonaqueous electrolyte secondary battery for evaluation of each example. After the activating process was performed, the nonaqueous electrolyte secondary battery for evaluation of each example was electrically charged until the SOC reached 50%, and then it was kept under -10°C environment. On this nonaqueous electrolyte secondary battery for evaluation of each example, a constant current electrical discharge was performed at a current value being 3 C for 10 seconds, and then an output (an electrical discharge resistance) was measured. A ratio of the output of the nonaqueous electrolyte secondary batteries for evaluation, in which the positive electrode active materials in accordance with the other examples were used, was calculated, while the output of the nonaqueous electrolyte secondary battery for evaluation, in which the positive electrode active material in accordance with Example 3 was used, was treated as 100. The result is shown at an item "Output characteristic" in Table 2.
Incidentally, with respect to the above described output characteristic evaluation, an electrical voltage change amount ($\Delta$V) for the constant electrical current discharge was obtained, and Formula (I) described below was used, so that a resistance value (an initial resistance value) before preservation was calculated.

Resistance value = Electrical voltage change amount ($\Delta V$) / Electrical current value (3 C) ... (I)          (I)

The obtained initial resistance value was used in calculating a later described preservation resistance increasing rate.

<Evaluation of preservation resistance increasing rate>

The nonaqueous electrolyte secondary battery for evaluation of each example, after the output characteristic evaluation, was kept under 25°C environment and its SOC was adjusted to 100%. This each nonaqueous electrolyte secondary battery for evaluation was kept in a thermostatic chamber at 60°C, and was preserved for 30 days. Then, by a method similar to the initial resistance, the resistance value after the preservation was calculated.
Then, Formula (II) described below was used, so that the resistance increasing rate (%) was calculated:

Resistance increasing rate (%) = (Resistance value after preservation / Resistance value before preservation) x 100 $\cdots$ (II)          (II)

The result is shown at an item "Preservation resistance increasing rate" in Table 2.

[Table 2]

Table 2

| | Positive electrode active material | | | | | | Evaluation of positive electrode active material | | |
| | First positive electrode active material particle | | | Second positive electrode active material particle | | Weight ratio A of second positive electrode active material particle (wt%) | | | |
| | Average particle diameter $d_1$ ($\mu$m) | Shape | Composition | Average particle diameter $d_2$ ($\mu$m) | Composition | | Electrode density ratio | Output characteristic | Preservation resistance increasing rate (%) |
|---|---|---|---|---|---|---|---|---|---|
| Example 1 | 2 | secondary particle | NCM | 0.1 | NCM | 3 | 98 | 100 | 150 |
| Example 2 | 3 | secondary particle | NCM | 0.1 | NCM | 3 | 108 | 100 | 130 |
| Example 3 | 4 | secondary particle | NCM | 0.1 | NCM | 3 | 113 | 100 | 130 |
| Example 4 | 5 | secondary particle | NCM | 0.1 | NCM | 3 | 119 | 100 | 130 |
| Example 5 | 6 | secondary particle | NCM | 0.1 | NCM | 3 | 120 | 90 | 130 |
| Example 6 | 4 | single particle | NCM | 0.1 | NCM | 3 | 113 | 100 | 120 |
| Example 7 | 4 | single particle | NCM | 0.1 | LFP | 3 | 113 | 110 | 120 |

As Example 1 to Example 5 in Table 2 were compared to each other, it was found that, regarding Example 1 in which the average particle diameter $d_1$ ($\mu$m) of the first positive electrode active material particle was 2 $\mu$m, the resistance increase at the preservation time was not properly suppressed in comparison with Example 2 to Example 5. On the other hand, regarding Example 5 in which the average particle diameter $d_1$ of the first positive electrode active material particle was 6$\mu$m, it was found that the output characteristic was reduced. It is estimated that this is caused by the moving distance of the lithium ion becoming longer since the particle diameter of the first positive electrode active material particle is too large. From this, it can be understood that both of the resistance characteristic at the preservation time and the output characteristic can be achieved when the average particle diameter $d_1$ ($\mu$m) of the first positive electrode active material particle is within a range of being equal to or more than 3 $\mu$m and not more than 5 $\mu$m. In addition, regarding Example 6 and Example 7 that the first positive electrode active material particle formed in the single-particle form was used, the resistance characteristic being further proper at the preservation time was obtained. In addition, regarding Example 7 in which the LFP was used as the second positive electrode active material particle, the output characteristic being further proper was obtained.

[Examination 2]

<Preparation of positive electrode active material>

In this examination, an examination was performed about a relationship between the average particle diameter $d_2$ ($\mu$m) of the second positive electrode active material particle with respect to the electrode density and the weight ratio A (wt%) of the second positive electrode active material particle. At first, as the first positive electrode active material particle, the $LiNi_{1/3}Co_{1/3}Mn_{1/3}O_2$ (NCM) formed in the secondary-particle form was prepared, whose average particle diameter $d_1$ ($\mu$m) was 4 $\mu$m. As the second positive electrode active material particle, the $LiNi_{1/3}Co_{1/3}Mn_{1/3}O_2$ (NCM) formed in the single-particle form were prepared, whose average particle diameter $d_2$ ($\mu$m) were respectively 0.1 $\mu$m, 0.3 $\mu$m, 0.5 $\mu$m, 1 $\mu$m, and 2 $\mu$m.

The prepared first positive electrode active material particle and second positive electrode active material particle were mixed to make the weight ratio A (wt%) of the second positive electrode active material particle satisfy 0 wt%, 3 wt%, 5 wt%, 10 wt%, 15 wt%, 20 wt%, 25 wt%, 30 wt%, 35 wt%, 40 wt%, or 45 wt% when the sum of the first positive electrode active material particle and the second positive electrode active material particle was treated as 100 wt%.

By a method similar to Examination 1, the positive electrode sheet for evaluation was manufactured, and then the electrode density ratio of the positive electrode active material layer was measured. Then, the electrode density ratio of the positive electrode active material layer in accordance with the other example was calculated, while the electrode density ratio of the positive electrode active material layer, which consisted of the positive electrode active material configured with only the first positive electrode active material particle (in other words, the weight ratio A of the second positive electrode active material particle was 0 wt%), was treated as 100. The number in Table 3 shows the result for the electrode density ratio as described above. Incidentally, in Table 3, those examples having an electrode density ratio of 103 or more are shown in bold. Additionally, in Table 3, examples of the positive electrode active material in which the average particle diameter $d_2$ of the second positive electrode active material particle is equal to or more than 0.1 $\mu$m and not more than 0.5 $\mu$m and in which the average particle diameter $d_2$ and the weight ratio A of the second positive electrode active material particle are within a range of being $A \leqq - 25d_2 + 37.5$, are surrounded by a bold frame.

[Table 3]

Table 3

| Table 3 | | | | | | |
|---|---|---|---|---|---|---|
| | | Average particle diameter $d_2$ of second positive electrode active material particle ($\mu$m) | | | | |
| | | 0.1 | 0.3 | 0.5 | 1 | 2 |
| Weight ratio A of second positive electrode active material particle (wt%) | 0 | 100 | 100 | 100 | 100 | 100 |
| | 3 | **113** | **106** | **103** | 101 | 100 |
| | 5 | **126** | **111** | **106** | 101 | 100 |
| | 10 | **126** | **114** | **108** | 101 | 100 |
| | 15 | **124** | **113** | **107** | 101 | 100 |
| | 20 | **120** | **110** | **106** | 100 | 99 |
| | 25 | **115** | **107** | **103** | 100 | 99 |
| | 30 | **111** | **104** | 101 | 98 | 98 |
| | 35 | **106** | 100 | 98 | 97 | 98 |
| | 40 | 101 | 96 | 95 | 95 | 97 |
| | 45 | 96 | 92 | 92 | 94 | 96 |

As shown in Table 3, regarding the positive electrode active material whose average particle diameter $d_2$($\mu$m) of the second positive electrode active material particle was 1 $\mu$m or 2 $\mu$m, the enhacement in the electrode density was hardly ever seen. Then, as shown in Table 3, regarding the positive electrode active material layer formed with the positive electrode active material in which the average particle diameter $d_2$ of the second positive electrode active material particle is equal to or more than 0.1 $\mu$m and not more than 0.5 $\mu$m and in which the average particle diameter $d_2$ of the second positive electrode active material particle and the weight ratio A of the second positive electrode active material particle satisfy the relationship of being A $\leqq$ - 25$d_2$ + 37.5, it can be understood that the proper electrode density can be obtained. As described above, it can be understood that all of the resistance characteristic at the preservation time, the output characteristic, and the enhancement in the electrode density can be achieved, according to the positive electrode active material in which the average particle diameter $d_1$ of the first positive electrode active material particle is equal to or more than 3 $\mu$m and not more than 5 $\mu$m, the average particle diameter $d_2$ of the second positive electrode active material particle is equal to or more than 0.1 $\mu$m and not more than 0.5 $\mu$m, the weight ratio A of the second positive electrode active material particle is equal to or more than 2 wt% and not more than 35 wt%, and the average particle diameter $d_2$ of the second positive electrode active material particle and the weight ratio A of the second positive electrode active material particle satisfy A $\leqq$ - 25$d_2$ + 37.5.

While described above, as a particular aspect of the herein disclosed technique, it is possible to use a recitation of each item described below.

<Item 1>

A positive electrode active material that is used for a nonaqueous electrolyte secondary battery, the positive electrode active material, comprising:

a first positive electrode active material particle; and
a second positive electrode active material particle, wherein
an average particle diameter $d_1$ ($\mu$m) of the first positive electrode active material particle is equal to or more than 3 $\mu$m and not more than 5 $\mu$m,
an average particle diameter $d_2$ ($\mu$m) of the second positive electrode active material particle is equal to or more than 0.1 $\mu$m and not more than 0.5 $\mu$m,
a weight ratio A (wt%) of the second positive electrode active material particle is equal to or more than 2 wt% and not more than 35 wt% when a sum of the first positive electrode active material particle and the second positive electrode active material particle is treated as 100 wt%, and
the average particle diameter $d_2$ of the second positive electrode active material particle and the weight ratio A of the second positive electrode active material particle satisfy a relationship described below:

15

$$A \leqq - 25d_2 + 37.5.$$

<Item 2>

The positive electrode active material recited in Item 1, wherein
the first positive electrode active material particle is in a single-particle form.

<Item 3>

The positive electrode active material recited in Item 1 or 2, wherein
the second positive electrode active material particle is lithium iron phosphate.

<Item 4>

A positive electrode, comprising:

a positive electrode current collector; and
a positive electrode active material layer that is arranged on the positive electrode current collector, wherein
the positive electrode active material layer comprises the positive electrode active material recited in any one of Items 1 to 3.

<Item 5>

The positive electrode recited in Item 4, wherein
the first positive electrode active material particle and the second positive electrode active material particle are dispersed throughout the entire positive electrode active material layer.

<Item 6>

A nonaqueous electrolyte secondary battery, comprising:

a positive electrode;
a negative electrode; and
a nonaqueous electrolyte, wherein
the positive electrode comprises the positive electrode active material recited in any one of Item 1 to 3.

**Claims**

1.  A positive electrode active material (10) that is used for a nonaqueous electrolyte secondary battery (100), the positive electrode active material, comprising:

    a first positive electrode active material particle (12); and
    a second positive electrode active material particle (14), wherein
    an average particle diameter $d_1$ ($\mu$m) of the first positive electrode active material particle (12) is equal to or more than 3 $\mu$m and not more than 5 $\mu$m,
    an average particle diameter $d_2$ ($\mu$m) of the second positive electrode active material particle (14) is equal to or more than 0.1 $\mu$m and not more than 0.5 $\mu$m,
    a weight ratio A (wt%) of the second positive electrode active material particle (14) is equal to or more than 2 wt% and not more than 35 wt% when a sum of the first positive electrode active material particle (12) and the second positive electrode active material particle (14) is treated as 100 wt%, and
    the average particle diameter $d_2$ of the second positive electrode active material particle (14) and the weight ratio A of the second positive electrode active material particle (14) satisfy a relationship described below:

$$A \leqq - 25d_2 + 37.5.$$

2.  The positive electrode active material (10) according to claim 1, wherein

the first positive electrode active material particle (12) is in a single-particle form.

3. The positive electrode active material (10) according to claim 1 or 2, wherein
the second positive electrode active material particle (14) is lithium iron phosphate.

4. A positive electrode (50), comprising:

   a positive electrode current collector (52); and
   a positive electrode active material layer (54) that is arranged on the positive electrode current collector (52), wherein
   the positive electrode active material layer (54) comprises the positive electrode active material (10) according to any one of claims 1 to 3.

5. The positive electrode (50) according to claim 4, wherein
the first positive electrode active material particle (12) and the second positive electrode active material particle (14) are dispersed throughout the entire positive electrode active material layer (54).

6. A nonaqueous electrolyte secondary battery (100), comprising:

   a positive electrode (50);
   a negative electrode (60); and
   a nonaqueous electrolyte (80), wherein
   the positive electrode (50) comprises the positive electrode active material (10) according to any one of claims 1 to 3.

FIG.1

FIG.2

FIG.3

FIG.4

FIG.5

REFERENCES CITED IN THE DESCRIPTION

**Patent documents cited in the description**

- JP 2023091568 A